# EUROPEAN PATENT SPECIFICATION

(11) **EP 1 697 912 B1**
(45) Date of publication and mention of the grant of the patent: **06.04.2011**
(21) Application number: 04808783.7
(22) Date of filing: 13.12.2004
(51) Int. Cl.: G08G 1/0967, B60K 31/00

(54) **SYSTEM FOR CONTROLLING THE SPEED OF A VEHICLE**
SYSTEM ZUR STEUERUNG DER GESCHWINDIGKEIT EINES FAHRZEUGS
SYSTEME DESTINE A REGULER LA VITESSE D'UN VEHICULE

(30) Priority: 22.12.2003 NL 1025095
(43) Date of publication of application: 06.09.2006
(73) Proprietor: Stichting Noble House, 2161 AC Lisse (NL)
(72) Inventor: DIJKSTRA, Patrick, NL-3465 TJ Driebruggen (NL); DE WILDE, Tom, Marnix, Alexander, NL-2161 AC Lisse (NL); DE WILDE, Jim, Sven, Anthony, NL-2161 AC Lisse (NL)
(74) Representative: Vernout, Robert
(86) International application number: PCT/NL2004/000867
(87) International publication number: WO 2005/062276

(56) References cited:
- EP-A- 1 302 356
- WO-A-03/077222
- DE-A1- 3 126 481
- US-A1- 2002 022 920

## Description

The invention relates to a system for controlling the speed of a vehicle along a route. The invention in particular relates to a system capable of controlling the speed of a vehicle in, for example, a so-called "green wave".

A "green wave" comprises a road provided with a number of traffic lights, which traffic lights are attuned to each other in such a manner that if a driver of a vehicle maintains a recommended speed as indicated on signs, he will only encounter green lights along that route and will not have to stop for a red light, therefore. To that end, the driver must adjust, i.e. increase or decrease, his speed, if necessary, from the moment he enters the route in question in order to ensure that the recommended speed has been realised, at least on average, upon arrival at the next traffic light. WO03/077222 describes an automatic vehicle guidance method and system. The object of the invention is to provide a system that can help the driver maintain the recommended speed along a route

To that end, the system comprises a position determining device, an electronic database containing position data that represent the starting point and the end point of at least one route and speed data linked thereto, which represent the desired upper limit and/or lower limit of the average speed of the vehicle along that route, position comparing means capable of determining whether the vehicle is present within said route, speed determining means capable of determining, if the vehicle is present within said route, a representative of the average speed of the vehicle from the moment the vehicle has entered the route according to the position comparing means, speed comparing means capable of determining to what extent the average speed determined in this manner deviates from the desired lower limit or upper limit of the average speed, and signalling means capable of delivering a control signal to increase or decrease the speed of the vehicle, as the case may be, in dependence thereon.

In relation to a "green wave", the term route is to be understood to mean a road section between the beginning of a green wave and the first traffic lights, or between two successive traffic lights in a green wave. In general, the term route as used within the framework of the invention comprises a road section between two successive positions along a road, between which an average speed is to be maintained.

The position determining device may be a GPS device or a LORAN device, for example.

In a first preferred embodiment, the database is present in the vehicle'. The database may be loaded with current data at regular intervals. In a second preferred embodiment, the database is present at a fixed position outside the vehicle, wherein the system furthermore comprises wireless communication means by which a wireless data link can be maintained between the database and the vehicle. Said communication means may be GSM or RDS, for example.

In a simple embodiment, the system only determines whether the speed of the vehicle falls outside the desired speed range and the only signalling that takes place is to increase or decrease the speed. In a more advanced embodiment, the system determines by how much the speed deviates from the lower limit and/or the upper limit, and the control signal preferably comprises a calculated recommended speed that is to be maintained on the remaining part of the route in order to realise an average speed, calculated over the entire route, above or at the desired lower limit or below or at the desired upper limit.

The control signal may be an audio signal and/or a visual signal. Furthermore, the control system may be transmitted to a cruise control device, in which case the calculated recommended speed is automatically set by the cruise control device. Preferably, the latter only takes place if the calculated recommended speed is lower than the actual speed of the vehicle.

Furthermore, the signalling means preferably indicate the distance from the vehicle to the end point of the route. This enables to driver to estimate how much time he has left to adapt his speed.

The database is preferably stored in electronic memory means, and preferably the position comparing means, the speed determining means and the speed comparing means are at least partially formed by at least one central processing unit, which is connected to memory means and which can be loaded with an instruction set for that purpose.

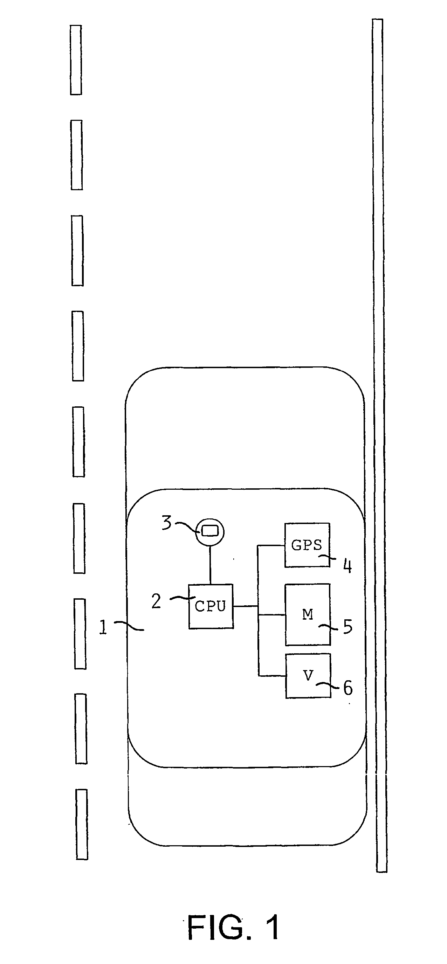

The invention will now be explained in more detail with reference to an embodiment which is schematically illustrated in the figure.

According to the figure, a system for controlling the speed of a vehicle 1 along a route comprises a central processing unit 2, which is connected to signalling means 3, a GPS position determining device 4, a memory 5 and a speedometer 6.

The memory 5 is loaded with a database that contains position data representing the starting point and the end point of at least one route. Said starting point and end point may be the positions of two successive traffic lights in a green wave, for example. Furthermore, said positions may be the starting point and the end point of routes along which speed checks are frequently carried out. The database is furthermore contains speed data linked to each route, which represent the desired upper limit and/or lower limit of the vehicle 1 along that route.

The central processing unit 2 is loaded with an algorithm for comparing the position that is supplied by the GPS device 4 at short intervals with the database in the memory 5 so as to determine whether the vehicle 1 is present within a particular section.

If the vehicle 1 is present within said section, the average speed of the vehicle 1 can be determined by means of the speedometer 6 from the moment the vehicle 1 has entered the section in question.

The central processing unit 2 is furthermore loaded with a speed comparing algorithm for determining to what extent the calculated average speed deviates from the desired lower limit or upper limit of the average speed associated with the section in question.

In that case the display 3 can display a control or warning signal in dependence thereon, telling the driver to increase or decrease the speed of the vehicle 1, as the case may be, in order to ensure that an average speed that remains within the desired limits has been realised at the end of the section. The warning signal, which may also be an audio signal, may be a simple warning signal or a signal that provides exact information about the recommended speed to be maintained on the remaining part of the route.

Preferably, the driver will be able to set, using a control panel, whether the calculated recommended speed is the highest possible speed at which the average speed will equal the desired upper limit or the lowest possible speed at which the average speed will equal at the desired lower limit, or a value therebetween.

If required, the system can easily be arranged such that it can provide the driver with additional information, such as the average speed at which he has driven along the route until that moment, his maximum speed along the route in question, the total length of the route, the distance yet to be covered along that roue, the direction in which the vehicle is driving, etc. Advantageously, the device may also be at least partially integrated with a road information system, because the system has many components in common therewith, as well as with a cruise control device so as to effect speed adjustments at least partially automatically.

## Claims

1. A system for controlling the speed of a vehicle. (1) along a route, comprising:
a position determining device (4),
an electronic database containing position data that represent the starting point and the end point of at least one route, and speed data linked thereto which represent the desired upper limit and/or lower limit of the speed of the vehicle (1) along that route,
position comparing means arranged to determine whether the vehicle (1) is present within said route,
speed determining means (6) arranged to determine the speed of the vehicle,
a central processing unit (2) comprising a speed comparing algorithm arranged to determine a representative of the speed of the vehicle (1) and compare said representative with the desired lower limit or upper limit, and
signalling means (3) arranged to deliver a control signal to increase or decrease the speed of the vehicle (1), as the case may be, in dependence thereon,
**characterized in that**
said representative of the speed of the vehicle determined by the central processing unit (2) is a representative of the average speed of the vehicle (1) between the starting point of said route and the current position of the vehicle (1) in said route,
the central processing unit (2) is arranged such that, if said representative of the average speed between the starting point and the current position
deviates from the desired lower limit or upper limit of the average speed, the signaling means (3) deliver said control signal in such manner that, the control signal comprises a calculated recommended speed that is to be maintained on the remaining part of the route in order to realise an average speed, calculated over the entire route, above or at the desired lower limit or below or at the desired upper limit.

2. A system according to claim 1, wherein the database is present in the vehicle (1).

3. A system according to claim 2, wherein the database is present at a fixed position outside the vehicle (1), and wherein the system furthermore comprises wireless communication means by which a wireless data link can be maintained between the database and the vehicle (1).

4. A system according to claim 1, 2 or 3, wherein the control signal comprises a calculated recommended speed that is to be maintained on the remaining part of the route in order to realise an average speed, calculated over the entire route, above or at the desired lower limit or below or at the desired upper limit.

5. A system according to any one of the preceding claims 1 - 4, wherein the signalling means (3) indicate the distance from the vehicle (1) to the end point of the route.

6. A system according to any one of the preceding claims 1 - 5, wherein the database is preferably stored in electronic memory means (5).

7. A system according to any one of the preceding claims 1 - 6, wherein the position comparing means and the speed comparing means are at least partially formed by at least one central processing unit (2), which is connected to memory means (5) and which can be loaded with an instruction set for that purpose.

## Patentansprüche

1. System zur Steuerung der Geschwindigkeit eines Fahrzeugs (1) entlang einer Route, umfassend:
eine Positionsbestimmungseinrichtung (4),
eine elektronische Datenbank, die Positionsdaten, die den Startpunkt und den Endpunkt von mindestens einer Route repräsentieren, und damit verbundene Geschwindigkeitsdaten enthält, die die gewünschte obere Grenze und/oder untere Grenze der Geschwindigkeit des Fahrzeugs (1) entlang der Route repräsentieren,
ein Positionsvergleichsmittel zum Bestimmen, ob sich das Fahrzeug (1) auf der Route befindet,
ein Geschwindigkeitsbestimmungsmittel (6) zum Bestimmen der Geschwindigkeit des Fahrzeugs,
eine zentrale Verarbeitungseinheit (2) mit einem Geschwindigkeitsvergtcichsaigorithmus zum Bestimmen eines Repräsentanten der Geschwindigkeit des Fahrzeugs (1) und Vergleichen des Repräsentanten mit der gewünschten unteren Grenze oder oberen Grenze,
und
ein Signalisierungsmittel (3) zum Liefern eines Steuersignals zum Erhöhen oder Verringern der Geschwindigkeit des Fahrzeugs (1) je nach Lage des Falles in Abhängigkeit davon,
**dadurch gekennzeichnet, dass**
der von der zentralen Verarbeitungseinheit (2) bestimmte Repräsentant der Geschwindigkeit des Fahrzeugs ein Repräsentant der Durchschnittsgeschwindigkeit des Fahrzeugs (1) zwischen dem Startpunkt der Route und der aktuellen Position des Fahrzeugs (1) auf der Route ist,
die zentrale Verarbeitungseinheit (2) derart gestaltet ist, dass, wenn der Repräsentant der Durchschnittsgeschwindigkeit zwischen dem Startpunkt und der aktuellen Position von der gewünschten unteren Grenze oder oberen Grenze der Durchschnittsgeschwindigkeit abweicht, das Signalisiertingsmittel (3) das Steuersignal in einer Weise liefert, dass das Steuersignal eine berechnete empfohlene Geschwindigkeit aufweist, die auf dem verbleibenden Teil der Route einzuhalten ist, um eine über die gesamte Route berechnete Durchschnittsgeschwindigkeit zu realisieren, die oberhalb oder auf der gewünschten unteren Grenze oder unterhalb oder auf der gewünschten oberen Grenze liegt.

2. System nach Anspruch 1, **dadurch gekennzeichnet, dass** die Datenbank in dem Fahrzeug (1) vorhanden ist.

3. System nach Anspruch 2, **dadurch gekennzeichnet, dass** die Datenbank an einer festen Position außerhalb des Fahrzeugs (1) vorhanden ist und dass das System ferner ein drahtloses Kommunikationsmittel umfasst, mittels dessen eine drahtlose Datenverbindung zwischen der Datenbank und dem Fahrzeug (1) aufrechterhalten werden kann.

4. System nach Anspruch 1, 2 oder 3, **dadurch gekennzeichnet, dass** das Steuersignal eine berechnete empfohlene Geschwindigkeit umfasst, die auf dem verbleibenden Teil der Route beizubehalten ist, um eine über die gesamte Route berechnete Durchschnittsgeschwindigkeit zu realisieren, die oberhalb oder auf der gewünschten unteren Grenze oder unterhalb oder auf der gewünschten oberen Grenze liegt.

5. System nach einem der vorangehenden Ansprüche 1 bis 4, **dadurch gekennzeichnet, dass** das Signalisierungsmittel (3) die Entfernung von dem Fahrzeug (1) bis zum Endpunkt der Route anzeigt.

6. System nach einem der vorangehenden Ansprüche 1 bis 5, **dadurch gekennzeichnet, dass** die Datenbank vorzugsweise in einem elektronischen Speichermittel (5) gespeichert ist.

7. System nach einem der vorangehenden Ansprüche 1 bis 6, **dadurch gekennzeichnet, dass** das Positionsvergleichsmittel und das Geschwindigkeitsvergleichsmittel zumindest teilweise durch zumindest eine zentrale Verarbeitungseinheit (2) gebildet sind, die mit dem Speichermittel (5) verbunden ist und die für den Zweck mit einem Befehlssatz geladen sein kann.

## Revendications

1. Système destiné à réguler la vitesse d'un véhicule (1) sur une route, comprenant :
un dispositif (4) de détermination de position,
une base de données électronique contenant des données de position qui représentent le point de départ et le point d'arrivée d'au moins une route, ainsi que des données de vitesse associées à celles-ci qui représentent la limite supérieure souhaitée et/ou la limite inférieure souhaitée de la vitesse du véhicule (1) sur cette route,
des moyens de comparaison de position agencés pour déterminer si le véhicule (1) s'est engagé sur ladite route,
des moyens (6) de détermination de vitesse agencés pour déterminer la vitesse du véhicule,
une unité centrale (2) comprenant un algorithme de comparaison de vitesse agencé pour déterminer une valeur représentative de la vitesse du véhicule (1) et comparer ladite valeur représentative à la vitesse inférieure souhaitée ou la vitesse supérieure souhaitée, et
des moyens de signalisation (3) agencés pour fournir un signal de commande permettant d'augmenter ou d'abaisser la vitesse du véhicule (1), si nécessaire, en fonction de ces déterminations,
**caractérisé en ce que**
ladite valeur représentative de la vitesse du véhicule déterminée par l'unité centrale (2) est une représentation de la vitesse moyenne du véhicule (1) entre le point de départ de ladite route et la position actuelle du véhicule (1) sur ladite route,
l'unité centrale (2) est agencée de telle sorte que, si ladite valeur représentative de la vitesse moyenne entre le point de départ et la position actuelle s'écarte de la limite inférieure souhaitée ou de la limite supérieure souhaitée de la vitesse moyenne, les moyens (3) de signalisation fournissent ledit signal de commande de manière à ce que, le signal de commande comprenne une vitesse recommandée calculée qui doit être maintenue sur la partie restante de la route afin de réaliser une vitesse moyenne, calculée sur toute la route, au-dessus de la limite inférieure souhaitée ou à la limite inférieure souhaitée ou bien au-dessous de la limite supérieure souhaitée ou à la limite supérieure souhaitée.

2. Système selon la revendication 1, dans lequel la base de données est présente dans le véhicule (1).

3. Système selon la revendication 2, dans lequel la base de données est présente à une position fixe en-dehors du véhicule (1), et dans lequel le système comprend en outre des moyens de communication sans fil par lesquels une liaison de données sans fil peut être maintenue entre la base de données et le véhicule (1).

4. Système selon la revendication 1, 2 ou 3, dans lequel le signal de commande comprend une vitesse recommandée calculée qui doit être maintenue sur la partie restante de la route afin de réaliser une vitesse moyenne, calculée sur toute la route, au-dessus de la limite inférieure souhaitée ou à la limite inférieure souhaitée ou bien au-dessous de la limite supérieure souhaitée ou à la limite supérieure souhaitée.

5. Système selon l'une quelconque des revendications précédente 1 à 4, dans lequel les moyens de signalisation (3) indiquent la distance du véhicule (1) jusqu'au point d'arrivée de la route.

6. Système selon l'une quelconque des revendications précédentes 1 à 5, dans lequel la base de données est de préférence stockée dans une mémoire électronique (5).

7. Système selon l'une quelconque des revendications précédentes 1 à 6, dans lequel les moyens de comparaison de position et les moyens de comparaison de vitesse sont au moins partiellement formés d'au-moins une unité centrale (2), qui est reliée à une mémoire (5) et qui peut être chargée à cette fin par un jeu d'instructions.
